# EUROPÄISCHE PATENTSCHRIFT

(11) **EP 2 911 916 B1**
(45) Veröffentlichungstag und Bekanntmachung des Hinweises auf die Patenterteilung: **18.01.2017**
(21) Anmeldenummer: 13776781.0
(22) Anmeldetag: 10.10.2013
(51) Int. Cl.: B60R 13/08, F28F 9/20, F28D 20/00, F28D 20/02, F01N 5/02, F01N 13/14

(54) **VERBESSERTES WÄRMEABSCHIRMSYSTEM**
IMPROVED THERMAL SHIELDING SYSTEM
SYSTÈME DE BLINDAGE THERMIQUE AMÉLIORÉ

(30) Priorität: 26.10.2012 DE 102012110268
(43) Veröffentlichungstag der Anmeldung: 02.09.2015
(73) Patentinhaber: ElringKlinger AG, 72581 Dettingen/Erms (DE)
(72) Erfinder: BEYERLEIN, Gerd-Sebastian, 90482 Nürnberg (DE)
(74) Vertreter: Patronus IP Patent- und Rechtsanwälte
(86) Internationale Anmeldenummer: PCT/EP2013/071212
(87) Internationale Veröffentlichungsnummer: WO 2014/063927

(56) Entgegenhaltungen:
- EP-A1- 0 439 432
- DE-A1- 4 031 873
- DE-A1- 19 735 388
- DE-A1-102009 030 105
- DE-A1-102011 018 382
- DE-U1- 20 316 050
- US-A- 5 290 904
- US-A- 5 477 676
- US-A- 5 532 039
- US-A- 5 555 932
- US-A- 5 804 297

## Beschreibung

Die Erfindung betrifft ein verbessertes Wärmeabschirmsystem nach dem Oberbegriff des Anspruchs 1.

Wärmeabschirmsysteme sind in vielen Bereichen, in denen heiße Bereiche abgeschirmt werden müssen, bekannt. Insbesondere im Bereich der Brennkraftmaschinen und insbesondere im Bereich von Kraftfahrzeugen.

Derartige Wärmeabschirmsysteme bestehen üblicherweise aus Blechen oder Blechstrukturen, welche insbesondere häufig strukturiert bzw. konturiert sind und zwischen einem heißen Bereich, beispielsweise einem Abgaskrümmer, und dem übrigen Motorenraum bzw. anderen Baugruppen angeordnet werden, um diese vor Strahlungswärme zu schützen.

Zudem besteht eine Bestrebung in Fahrzeugen, die Abwärme der Verbrennungskraftmaschinen zurückzugewinnen, da Verbrennungskraftmaschinen mit einem relativ geringen Wirkungsgrad arbeiten und viel Wärme freisetzen. Diese Wärme kann beispielsweise genutzt werden, um z. B. Kaltstarts zu verhindern.

Aus der DE 10 2009 030 105 A1 ist ein Wärmerückgewinnungssystem für Kraftfahrzeuge bekannt umfassend einen Verbrennungsmotor mit einem Wärmespeicher, der zumindest in mittelbarer wärmeübertragender Verbindung mit dem Verbrennungsmotor steht und Abwärme des Verbrennungsmotors aufnimmt und speichert, wobei der Wärmespeicher als mobiler Wärmespeicher ausgeführt ist, der im wärmeaufgeladenen Zustand wahlweise aus dem Kraftfahrzeug entfernbar sein soll. Dieser Wärmespeicher soll beispielsweise ein Adsorptionswärmespeicher sein, der sowohl feste als auch flüssige Adsorbentien umfassen kann, wie beispielsweise Zeolith, Silicagel und wässrige Salzlösungen.

Aus der DE 10 2008 037 595 A1 ist ein Kraftfahrzeug-Wärmespeicher bekannt, welcher Abwärme in einem Kraftfahrzeug speichert. Dieser Kraftfahrzeug-Wärmespeicher weist einen Absorptionskreislauf mit zumindest einem Desorber, einem Verdampfer und einem Absorber auf. Der Desorber ist thermisch derart an das Kraftfahrzeug ankoppelbar, dass dem Desorber Abwärme des Kraftfahrzeuges zur Verdampfung eines Kältemittels aus einer Kältemittel-Absorptionsmittel-Mischung zuführbar ist und der Kraftfahrzeug-Wärmespeicher weist separate Speicher zur Speicherung von Kältemittel und von mit Absorptionsmittel angereicherter Mischung auf, die bei der Desorption erhalten wurden. Der Verdampfer ist thermisch derart an mindestens ein Bauteil des Kraftfahrzeuges oder an mindestens ein Fluid im Bereich des Triebstranges des Kraftfahrzeuges ankoppelbar, dass im Bereich des Verdampfers bei einer Verdampfung von Kältemittel aufgenommene Wärme dem Bauteil bzw. dem Fluid entziehbar ist und/oder der Absorber thermisch derart an mindestens ein Bauteil des Kraftfahrzeuges oder ein Fluid im Bereich des Triebstranges ankoppelbar, dass im Bereich des Absorbers bei einer Absorption von Kältemittel freigesetzte Wärme dem Bauteil bzw. dem Fluid zuführbar ist.

Aus der US 5,532,039 A ist ein Wärmeabschirmsystem zum Abschirmen eines wärmeimitierenden Elements mit einer dem wärmeimitierenden Element zugewandten Heißseite oder Fläche und einer dem wärmeimitierenden Element abgewandten Kaltseite oder Fläche bekannt, wobei sowohl die Heißseite als auch die Kaltseite aus je einem Blech gebildet werden und die Bleche einen Raum zwischen sich begrenzen, wobei in dem Raum benachbart zu dem Blechdach der Heißseite eine Schicht aus einem Phasenwechselmaterial ausgebildet ist.

Aus der US 5,555,932 ist ebenfalls ein wärmeabschirmendes Bauelement bekannt, bei dem ein Phasenwechselmaterial vorhanden ist, welches überschüssige Wärme, welche durch eine Wärmequelle innerhalb des Fahrzeugs gebildet wird, absorbieren soll. Das Hitzeschild isoliert eine Komponente benachbart zur Wärmequelle und verhindert die Übertragung der Wärme auf das Element.

Aus der US 5,290,904 ist ein Wärmeabschirmelement bekannt, welches erste und zweite im Wesentlichen flacher feuerbeständiger Deckschichten aufweist, welche übereinander liegen. Ein Material, welches thermische Energie absorbieren kann, ist zwischen den beiden Lagen nach Art einer Sandwichkonstruktion angeordnet.

Das Material, welches die thermische Energie absorbieren soll, kann ein Phasenwechselmaterial als Gemenge, oder mikro- oder makrogekapseltes Material umfassen, wobei das Phasenwechselmaterial in einem Basismaterial eingebracht sein kann, um eine verbesserte thermische Isolierung zu leisten.

Aus der US 5,804,297 ist ein Wärmeabschirmsystem zum Abschirmen eines wärmeimitierenden Elements bekannt, wobei das Wärmeabschirmsystem aus einem Speichermaterial-Metallverbund ausgebildet ist und der Verbund Partikel aus Phasenwechselmaterial und einer Polymermatrix besitzt. Die Polymermatrix und das Phasenwechselmaterial sollen hierbei miteinander vermischt und auf einem Metallsubstrat aufgeklebt oder gesintert sein.

Aus der DE 40 31 873 A1 ist eine Wärmespeicheranlage insbesondere für ein Kraftfahrzeug bekannt, wobei diese Wärmespeicheranlage eine Zeolith-Schüttung einen Reaktionswasserkreislauf besitzt. Um die Lebensdauer des Zeoliths zu erhöhen, liegt bei ruhendem Reaktionswasserkreislauf der Absolutdruck im Kreislauf an, während die Zeolith-Schüttung unter Umgebungsdruck steht. Die Zeolith-Schüttung wird beispielsweise mit Abluft einer das Fahrzeug antreibenden Hochleistungsbatterie beheizt.

Aus der DE 10 2011 018 382 A1 ist ein Verfahren zur Regenerierung von thermochemischen Sorptionsspeichern, vorzugsweise von Zeolith und Vorrichtung zur Durchführung des Verfahrens bekannt, wobei der thermomechanische Sorptionsspeicher Zeolith umfasst, was bei Zuführung von Feuchtigkeit erwärmt wird. Sobald das Zeolith mit Feuchtigkeit gesättigt ist, kann es durch Zuführung von Wärme regeneriert werden, wobei hierfür die während des Transportes mit einem Fahrzeug im Fahrzeug entstehende Abwärme oder die bei einer stationären Wärmequelle entstehende Abwärme herangezogen wird. Der Regenerationsbehälter soll hierbei Teil eines Fahrzeugs und insbesondere eines Lastkraftwagens sein oder ein an einer stationäre Wärmequelle angeschlossenes Teil sein.

Aus der 10 2009 030 105 A1 ist ein Wärmerückgewinnungssystem für ein Kraftfahrzeug bekannt, wobei ein Verbrennungsmotor vorhanden ist sowie ein Wärmespeicher, der in zumindest mittelbar wärmeübertragender Verbindung mit dem Verbrennungsmotor steht und die Abwärme des Verbrennungsmotors aufnimmt und speichert. Hierbei soll der Wärmespeicher als mobiler Wärmespeicher ausgeführt sein, der in Wärme aufgeladenem Zustand auch aus dem Kraftfahrzeug entfernbar ist.

Es ist bekannt, dass thermochemische Wärmespeicher Wärme durch endotherme Reaktionen speichern und sie durch eine exotherme Reaktion wieder abgeben.

Ein Beispiel für einen thermomechanischen Wärmespeicher ist ein sogenannter Sorptionsspeicher, welcher z. B. aus Silicagelgranulat besteht, welches mikroskopisch und stark porös ist. Silicagele haben die Eigenschaft Wasserdampf anzuziehen und an ihrer Oberfläche anzulagern (Adsorption), wobei Wärme frei wird. Umgekehrt muss zum Trocknen von Silicagelen Wärmeenergie aufgewendet werden. Silicagele werden insbesondere als Trockenstoffe eingesetzt, um in abgeschlossenen Bereichen (Verpackungen) auftretende Feuchtigkeit zu adsorbieren.

Derartige Sorptionsspeicher können 200 kWh/m³ bis 300 kWh/m³ an Energie speichern, wobei die Energie verlustfrei speicherbar ist.

Andere bekannte thermochemische Wärmespeicher sind Metallhydride und Zeolithe, bei denen jedoch die Betriebstemperaturen höher sind. Die Arbeitstemperatur der Metallhydride liegt hierbei zwischen 280 °C und 500 °C, von Silicagel bei etwa 40 °C bis 100 °C und von Zeolithen etwa bei 130 °C bis 300 °C.

Aufgabe der Erfindung ist es ein verbessertes Abschirmsystem zu schaffen, bei dem Wärmequellen effektiver abgeschirmt werden können und die auftretende Strahlungswärme besser genutzt wird.

Die Erfindung wird mit einem Abschirmsystem mit den Merkmalen des Anspruchs 1 gelöst.

Vorteilhafte Weiterbildungen sind in den hiervon abhängigen Unteransprüchen gekennzeichnet.

Die Erfindung sieht vor, thermochemische Speicher, insbesondere Sorptionsspeicher mit Abschirmelementen zu kombinieren. Diese Kombination ermöglicht es, mehr abgestrahlte Wärme aufzunehmen und die abgestrahlte Wärme im einfachsten Fall über einen langen Zeitraum in unkritischer Form abzugeben, wobei die Wärme auch genutzt werden kann.

Erfindungsgemäß kann dies mit einer Mehrzahl von Anordnungsmöglichkeiten realisiert werden. Einerseits kann ein Abschirmelement aus einer Blechinnen- und einer Blechaußenlagen bestehen mit gegebenenfalls einer Abschirmlage, wobei vom Hitze ausstrahlenden Körper abgewandt an der Abschirmlage ein Wärmespeichergranulat angeordnet ist. Eine solche Anordnung wird vorzugsweise vollständig durchströmt. Bei einer weiteren vorteilhaften Ausführungsform wird nur eine Teildurchströmung erreicht, wobei auch hier eine perforierte Blechinnenlage und eine Blechaußenhaut vorhanden sind sowie eine Abschirmlage, jedoch an der Lage mit dem Wärmespeichergranulat ein Dampf bzw. Fluid führendes Blech mit entsprechenden Strömungskanälen angeordnet ist, welches durchströmt wird und dementsprechend den Sorptionsspeicher regenerieren kann. Darüber hinaus ist es auch möglich Metall und Sorptionsspeicher nicht in dieser Weise lagig zu trennen, sondern eine Blech-/Wärmespeicherschicht durch poröse Formkörper zu ersetzen, welche Sorptionsspeicher-Metall-Verbundstrukturen darstellen. Hierdurch wird eine verbesserte Wärmeleitfähigkeit mit einer guten thermischen Anbindung und mechanischer Stabilität erreicht.

Darüber hinaus kann ein Kondensator vorhanden sein, welcher während der Adsorptionsphase Wasserdampf bzw. Wasser in das Granulat einleitet und dadurch das Granulat wieder in einen erwärmbaren Zustand versetzt. In der Regenerationsphase, welche im Fahrbetrieb und beim Abstrahlen von Hitze stattfindet, wird der Wasserdampf bzw. das Wasser aus dem Sorptionsspeicher ausgetrieben, wodurch dieser Wärme aufnimmt. Die austretende Feuchtigkeit wird in den Kondensator geführt, wo der Wasserdampf am kältesten Punkt kondensiert und zurückgewonnen wird.

Ein derartiger Kondensator kann über Sperrschichten verfügen, die ein Zurückfließen des Kondensats oder ein anderweitig ungewolltes Aktivieren des Wärmespeichergranulats verhindern. Eine solche ungewollte Aktivierung kann z. B. durch das Durchlassen von Dampf oder nicht ausreichender Behinderung des Rückflusses von Flüssigkeiten stattfinden.

Eine weitere vorteilhafte Ausführungsform der Erfindung sieht vor, dass zwei oder mehr unterschiedliche Sorptionsspeicherwerkstoffe miteinander kombiniert werden. Z. B. wird zur Heißseite hin ein Sorptionsspeicherwerkstoff verwendet, der besonders gut bei hohen Temperaturen funktioniert, z. B. Metallhydrid. Angrenzend an diese Schicht kann beispielsweise eine Sorptionsschicht aus Zeolith oder bei noch niedrigeren Temperaturen auch aus Silicagel angeordnet werden. Hierdurch wird das Temperaturgefälle besser ausgenutzt und der Systemwirkungsgrad erhöht.

Bei einer weiteren vorteilhaften Ausführungsform wird das Abschirmelement nicht nur mit dem Sorptionsspeicher sondern auch mit einer thermoelektrischen Funktionsschicht verknüpft. Hierbei ist die thermoelektrische Funktionsschicht dadurch wirksam, dass die Temperaturdifferenz durch die Anbindung an die Temperaturpotenziale sowohl der Blech-, d. h. der äußeren Blech-, als auch der Abschirmlagen angeordnet ist. Es kommt zu einer kombinierten Rekuperation über die thermische und die elektrische Route.

Die Erfindung wird anhand einer Zeichnung beispielhaft erläutert. Es zeigen dabei:

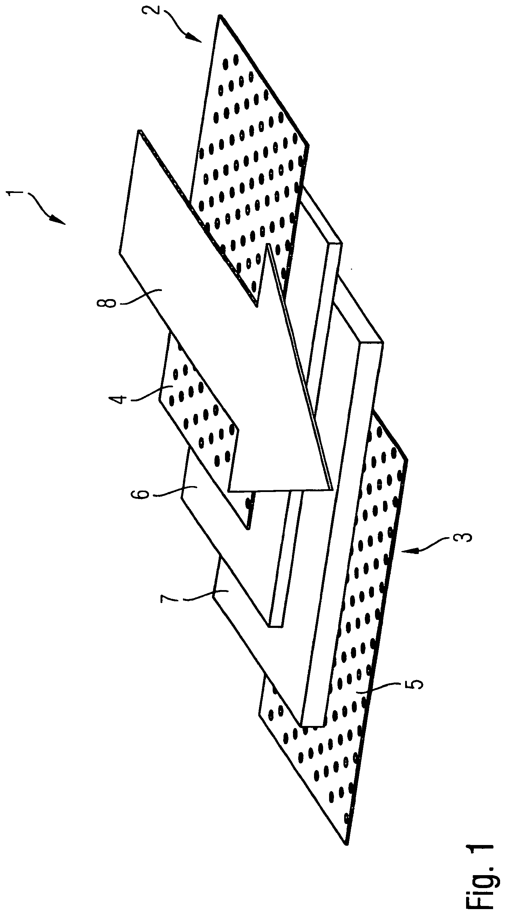

- Figur 1:: eine erste Ausführungsform der Integration eines Sorptionsspeichers in ein Abschirmelement in einer schematischen Darstellung;

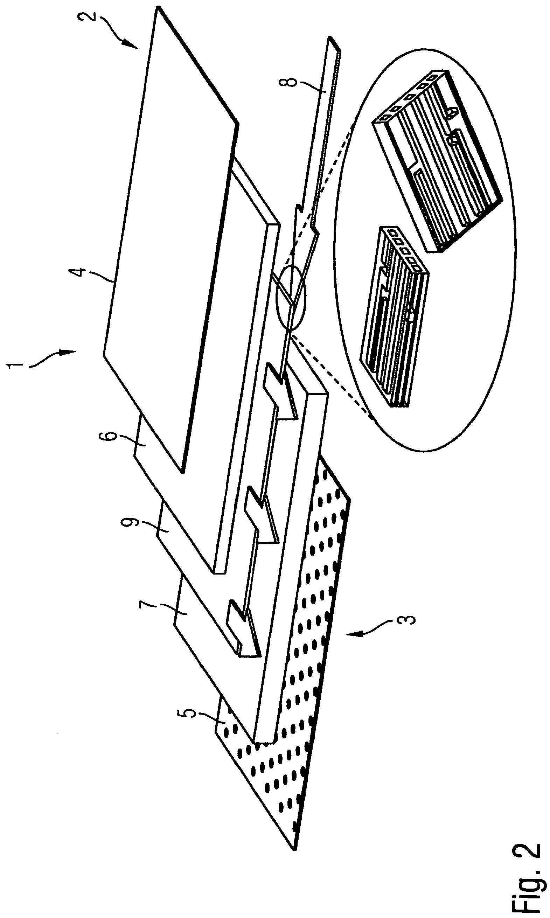

- Figur 2:: eine weitere Ausführungsform einer erfindungsgemäßen Vorrichtung;
- Figur 3:: schematisch eine Sorptionsspeicher-Metall-Verbundstruktur;
- Figur 4:: einen erfindungsgemäßen Sorptionsspeicher mit Kondensator in der Adsorptions- und Regenerationsphase;
- Figur 5:: einen kaskadierenden Sorptionsspeicher in einer schematischen Darstellung;
- Figur 6:: einen Sorptionsspeicher in Kombination mit einer thermoelektrischen Funktionsschicht;

Eine erste Ausführungsform des verbesserten Wärmeabschirmsystems 1 besitzt eine Abschirmsystemaußenseite oder Heißseite 3 und eine Wärmeabschirmsysteminnenseite oder Kaltseite 2. Die Wärmeabschirmsystemaußenseite 3 ist die Seite, die einer wärmeabstrahlenden oder wärmeemittierenden Einrichtung (nicht gezeigt) zugewandt ist, während die Innenseite 2 der wärmeabgebenden Einrichtung abgewandt ist. Insbesondere ist im Bereich der Außenseite 3 ein erstes Blech 5 angeordnet und im Bereich der Innenseite 2 ein Blech 4. Die Bleche 4, 5 begrenzen zwischen sich einen Hohlraum. Die Bleche 4, 5 können insbesondere relativ dünn und mit einer Perforation, mit Sicken, Ausnehmungen oder dergleichen ausgebildet sein. Benachbart zu dem an der Innenseite 2 angeordneten Blech 4 ist eine Abschirmlage 6 angeordnet, welche aus einem wärmestabilen Material besteht, z.B. aus Silikatfaser und/oder Schaummaterial und/oder Vlies und/oder Glasfaser.

An diese Abschirmlage 6, die flächig ausgebildet ist, schließt sich eine Wärmespeichergranulatschicht 7 an, welche einerseits an der Abschirmlage 6 und andererseits an der Blechaußenlage 5 anliegt. Die Abschirmlage 6 ist durchlässig, insbesondere dampf- und strömungsdurchlässig ausgebildet, ebenso wie die Lage aus dem Wärmespeichergranulat 7. Entsprechend des Pfeiles 8 ist die Lagenanordnung aus der insbesondere dünnen perforierten Blechinnenlage 4, der durchlässigen Abschirmlage 6, des Wärmespeichergranulats 7 bzw. der Wärmespeichergranulatschicht 7 und der dünn perforierten Blechaußenlage 5 durchströmbar.

Bei einer weiteren vorteilhaften Ausführungsform ist das Blech 4 an der Innenseite 2 insbesondere vollflächig ohne Ausnehmungen gebildet, wobei die Abschirmlage 6 an der Blechinnenseite 4 anliegt. Zwischen dem flächig angebrachten Wärmespeichergranulat 7 und der Abschirmlage 6 ist bei dieser Ausführungsform eine dampf- bzw. fluidführende Lage 9 eingebracht.

Die dampf- bzw. fluidführende Lage 9 ist beispielsweise ein Blech mit Strömungskanälen, ein Blechgewebe, ein Blechgitterverbund, strukturierte Blechpakete oder keramische Formkörper mit einer ausreichenden Anzahl an frei durchströmbaren Kanälen oder Bereichen und entsprechenden, zumindest zum Wärmespeichergranulat 7 hin gerichteten Öffnungen. Hierbei wird diese Lage 9 entsprechend der Strömungsrichtung 8 durchströmt.

An der Außenseite 3 ist wiederum eine Abschlusslage und insbesondere ein perforierte Blechaußenlage 5 angeordnet.

Bei der ersten Ausführungsform ist hierbei von Vorteil, dass sie einen sehr einfachen Aufbau besitzt, wobei jedoch Wärmeverluste in der Abschirmlage hingenommen werden müssen. Bei der Ausführungsform mit der durchströmbaren Zwischenlage ist von Vorteil, dass diese einen modularen Aufbau hat, vorne die Systeme einfach erweitert werden können und kein Eingriff in den Abschirmwerkstoff stattfindet, der in diesem Fall nicht durchströmbar ausgebildet sein muss.

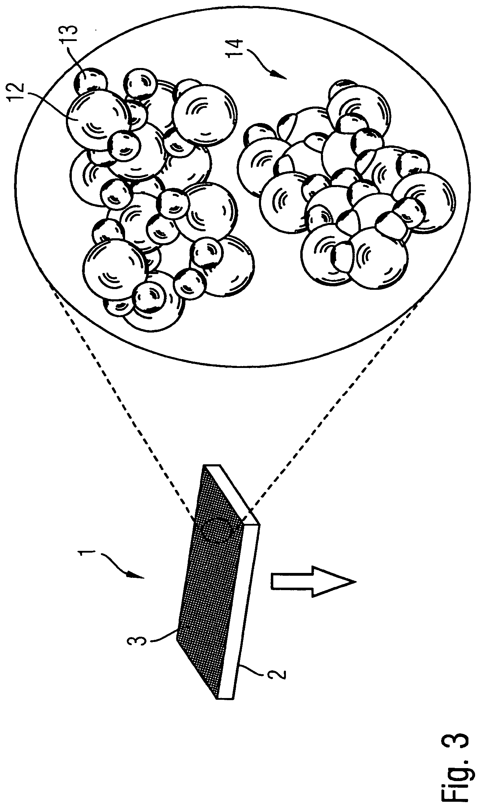

Bei einer weiteren vorteilhaften Ausführungsform (Figur 3) ist anstelle eines Blech-/Abschirmlage-/Wärmespeicherlageverbundwerkstoffes ein einziger Formkörper vorhanden, welcher sowohl die Abschirmfunktion als auch die Wärmespeicherfunktion übernimmt und somit das Wärmeabschirmsystem im Wesentlichen bildet. Dieser Formkörper 1 ist eine Sorptionsspeichermetallverbundstruktur, wobei Sorptionsspeicherpartikel 12 und Metallpartikel 13 vorhanden sind, welche miteinander, insbesondere über Klebung und/oder Sinterung zu einer porösen, durchlässigen Struktur 14 verbunden sind. Dieser poröse Formkörper 1 kann hierbei jede beliebige Form annehmen bzw. jede beliebige Form gepresst und in dieser geklebt oder gesintert sein, welche für ein Abschirmelement notwendig ist. Hierbei sorgen die Metallpartikel 13 insbesondere für die mechanische Stabilität aber auch für eine sehr gute Wärmeleitfähigkeit innerhalb des Formkörpers. Durch die freie Durchströmbarkeit können die einzelnen Sorptionsspeicherpartikel 12 sehr gut erreicht werden, so dass eine schnelle Absorption und Desorption gewährleistet ist. Hierbei kann eine solche Ausführungsform mit einem einzelnen SorptionsspeicherMaterial, wie z.B. Silicagel ausgebildet sein. Das entsprechende Wärmeabschirmsystem 1 aus dem porösen Formkörper kann jedoch auch über eine Metallverbundstruktur realisiert werden, welche abhängig vom Abstand zum abzuschirmenden, wärmeabstrahlenden Element, beispielsweise zu dem wärmeabstrahlenden Element hin, eine Metallhydrid-Metallverbundstruktur darstellt, die mit steigender Entfernung zum abzuschirmenden Bauelement mehr und mehr Zeolith und mit weiterer Entfernung dann auch mehr und mehr Silicagel enthält oder abgestuft aus zwei oder mehr unterschiedlichen Formkörpermaterialien besteht, so dass dem wärmeabstrahlenden Element zugewandt ein Material aus Metall und einem hochtemperaturfesten Sorptionsspeicher, wie Metallhydriden und an der "Kaltseite" aus eine Zeolith-Metallverbundstruktur besteht.

Ein derartiger Formkörper wie er zuvor beschrieben wurde der aus einer Sorptionsspeichermetallverbundstruktur besteht ersetzt somit die Lagen 5 und 7 bzw. 5, 7 und 9 ganz oder teilweise.

Das Metallgerüst kann hierbei aus verschiedenen Metallen ausgebildet sein um z. B. verschiedenen thermischen Anforderungen gerecht zu werden. Werden Wärmeträgerfluide eingesetzt kann es sinnvoll sein Metalle zu verwenden, die gegenüber dem Wärmeträgerfluid resistent und insbesondere korrosionsresistent sind.

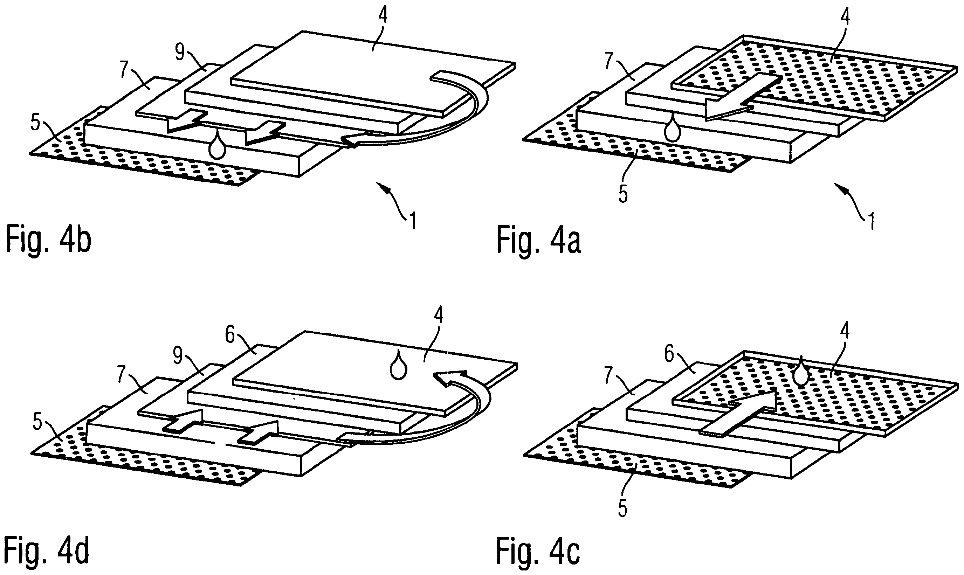

Bei einer weiteren vorteilhaften Ausführungsform (Figur 4) werden Elemente entsprechend der ersten und zweiten Ausführungsform mit einem Kondensator kombiniert. Hierbei wird in der Adsorptionsphase (Figuren 4a, 4b) Wasserdampf oder Wasser in die Wärmespeichergranulatschicht 7 eingeführt. In der Regenerationsphase (Figuren 4c, 4d) wird mittels der Wärme des abgeschirmten, wärmeabstrahlenden Elements das Wasser aus dem Sorptionsspeicher ausgetrieben und gelangt mit einer Strömung, die einer ersten Strömung zum Adsorbieren entgegengesetzt ist, aus dem Sorptionsspeichergranulat bzw. aus dem Sorptionsspeichergranulat in die dampf-/fluidführende Lage und dann zu einem entweder am Abschirmelement selbst oder entfern vom Abschirmelement in einen Kondensator, in dem die Feuchtigkeit kondensiert, um in der Adsorptionsphase rückgeführt zu werden.

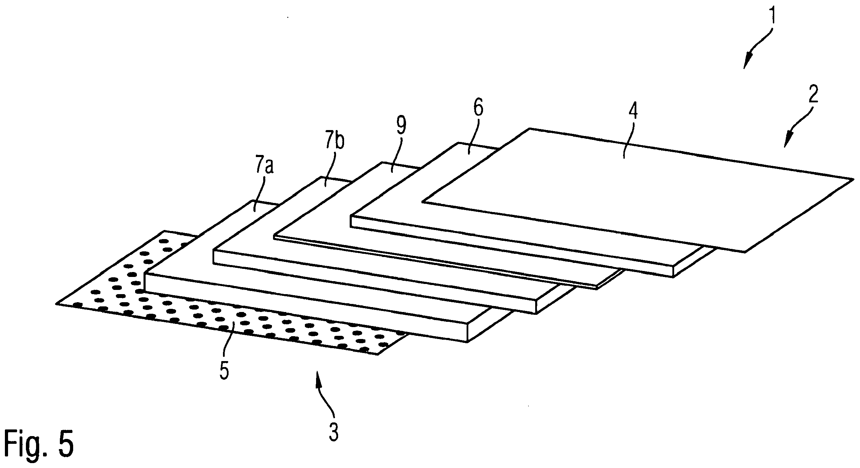

Bei einer weiteren vorteilhaften Ausführungsform (Figur 5) ist das Abschirmelement 1 kaskadierend ausgebildet, so dass zwischen der Abschirmlage 6 oder einer fluidführenden Lage 9 einerseits und der Blechaußenlage 5 flächig aufeinanderliegend zwei Sorptionsspeicherlagen 7a, 7b angeordnet sind, wobei insbesondere die Lage 7a aus einem Hochtemperaturspeicherwerkstoff, wie z.B. Zeolith besteht, während die Lage 7b die von der Blechaußenlage 5 beabstandet ist, aus einem Niedertemperaturspeicherwerkstoff, z.B. Silicagel besteht.

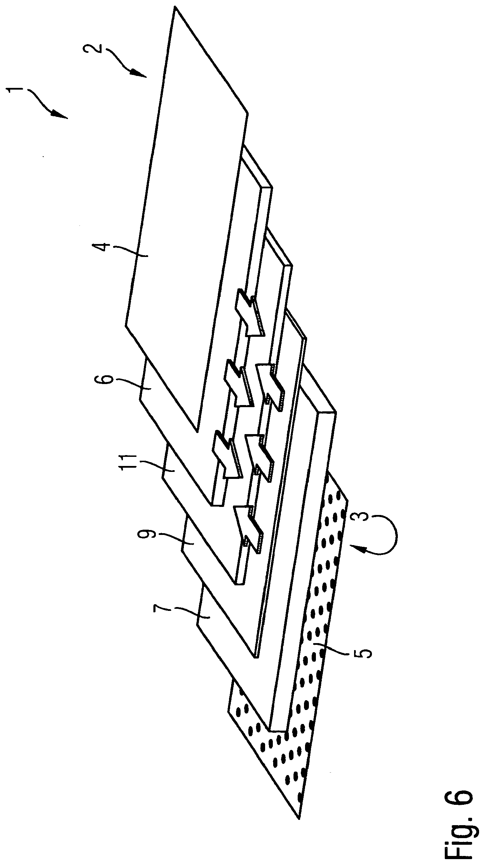

Bei einer weiteren vorteilhaften Ausführungsform (Figur 6) wird ein Abschirmelement 1 entsprechend der ersten bzw. zweiten Ausführungsform weiter ergänzt, indem zwischen der Abschirmlage 6 und der Sorptionsspeicherschicht 7 oder der Abschirmlage 6 und der fluidführenden Schicht 9 eine sogenannte thermoelektrische Funktionsschicht 11 angeordnet ist. Thermoelektrische Funktionsschichten 11 sind an sich bekannt. Bei diesen thermoelektrischen Funktionsschichten 11 wird die Temperaturdifferenz, die zwischen der Seite, an der die thermoelektrische Funktionsschicht 11 an die Abschirmlage 6 angebunden ist einerseits und der Temperatur der fluidführenden Schicht 9 dazu genutzt, eine elektrische Spannung zu erzeugen.

Diese Funktionsschicht 11 ist dabei bipolar betreibbar, d.h. während des Betriebes und Abstrahlen von Wärme durch ein abzuschirmendes Element wird eine bestimmte Spannung erzeugt, die von der Temperaturdifferenz und der Bauart der thermoelektrischen Funktionsschicht 11 abhängt.

Von Vorteil ist es, wenn die thermoelektrische Funktionsschicht flexibel ausgestaltet ist und insbesondere in Dünnschichttechnik erstellt ist, um die an frei geformten Abschirmteilen zur Verfügung stehende Fläche besonders gut ausnutzen zu können.

Hierbei können unterschiedliche, insbesondere beliebige thermoelektrische Grundwerkstoffe eingesetzt werden, wobei sich der Einsatz nach dem Temperaturgefälle richtet derart, dass die thermoelektrischen Grundwerkstoffe verwendet werden, die nach ihrem temperaturabhängigen Wirkungsgrad am besten zum Temperaturprofil in diesem Bereich passen.

Ein zusätzlicher Vorteil bei der Integration von thermoelektrischen Schichten ergibt sich dadurch, dass die Schichten durch Anlegen einer Spannung als Peltierelement geschaltet werden. Hierdurch können diese thermoelektrischen Schichten das Abschirmsystem aktiv kühlen bzw. zu einem aktiv gekühlten Abschirmsystem beitragen oder durch eine entsprechende Orientierung der Kaltseite unterstützend bei der Kondensation bzw. bei einem Kondensator mitwirken.

In der Adsorptionsphase kehrt sich das Temperaturgefälle um, so dass eine entsprechende Spannung wiederum erzeugt wird, auch wenn deren Polarität gegebenenfalls umgekehrt ist, welches jedoch schaltungstechnisch entsprechend korrigiert werden kann. Bei der Erfindung ist von Vorteil, dass Abschirmsysteme, insbesondere für Brennkraftmaschinen und insbesondere in Kraftfahrzeugen effektiver gestaltet werden und den Gesamtwirkungsgrad verbessern.

### Bezugszeichenliste

- 1: Wärmeabschirmsystem/Formkörper
- 2: Abschirmsystemaußenseite
- 3: Abschirmsysteminnenseite
- 4, 5: Bleche
- 6: Abschirmlage
- 7a, 7b: Wärmegranulatschicht
- 8: Pfeil
- 9: Dampf- bzw. fluidführende Lage

- 11: thermoelektrische Funktionsschicht
- 12: Sorptionsspeicherpartikel
- 13: Metallpartikel
- 14: Struktur

## Patentansprüche

1. Wärmeabschirmsystem (1) zum Abschirmen eines wärmeemittierenden Elements mit einer dem wärmeemittierenden Element zugewandten Heißseite (3) oder Fläche (3) und einer dem wärmeemittierenden Element abgewandten Kaltseite (2) oder Fläche (2), wobei
die Fläche (3) und die Fläche (2) je aus einem Blech (4, 5) definiert werden und die Bleche (4, 5) einen Raum zwischen sich begrenzen, **dadurch gekennzeichnet, dass** in dem Raum, benachbart zu dem Blech (5) der Heißseite (3) eine Schicht (7) aus einem Sorptionsspeichermaterial ausgebildet ist.

2. Wärmeabschirmsystem nach Anspruch 1, **dadurch gekennzeichnet, dass** das Sorptionsspeichermaterial ein Silicagel und/oder Zeolith und/oder Metallhydrid ist.

3. Wärmeabschirmsystem nach Anspruch 1 oder 2, **dadurch gekennzeichnet, dass** benachbart zu der Schicht (7) aus dem Sorptionsspeichermaterial einerseits und dem Blech (4) der Kaltseite (2) eine Abschirmschicht (6) aus einem wärmeabschirmenden Material angeordnet ist.

4. Wärmeabschirmsystem nach einem der Ansprüche 1 bis 3,
**dadurch gekennzeichnet, dass** eines oder beide der Bleche (4, 5) perforiert und/oder mit Durchlässen und/oder Sicken und/oder Löchern und/oder Ausnehmungen versehen sind.

5. Wärmeabschirmsystem nach einem der vorhergehenden Ansprüche, **dadurch gekennzeichnet, dass** zwischen der Schicht (7) aus einem Sorptionsspeichermaterial und der Schicht (6) aus dem Abschirmmaterial eine fluid-, wasser- oder wasserdampfführende Schicht (9) angeordnet ist.

6. Wärmeabschirmsystem nach Anspruch 5, **dadurch gekennzeichnet, dass** die fluidführende Schicht (9) aus dem Wärmeabschirmsystem (1) herausführende Kanäle oder Leitungen besitzt, wobei die fluidführende Schicht (9) zur Schicht (7) aus einem Sorptionsspeichermaterial hin mit Durchlässen, Öffnungen oder einer Perforation versehen ist.

7. Wärmeabschirmsystem nach Anspruch 6, **dadurch gekennzeichnet, dass** die fluidführende Schicht (9) aus einem Metall, einem Metallgeflecht, einem Metallgewebe, einem Metallgewirke, einer Metallstruktur oder aus einem keramischen, porösen Formkörper ausgebildet ist.

8. Wärmeabschirmsystem nach einem der vorhergehenden Ansprüche, **dadurch gekennzeichnet, dass** die Schicht (7) aus einem Sorptionsspeichermaterial eine Schicht ist, die aus unterschiedlichen Sorptionsspeichermaterialien ausgebildet ist, wobei das Sorptionsspeichermaterial nach Arbeitstemperatur geschichtet oder aus mehreren Sorptionsspeichermaterialien gemischt ist.

9. Wärmeabschirmsystem nach einem der vorhergehenden Ansprüche, **dadurch gekennzeichnet, dass** zwischen der Schicht (7) aus einem Sorptionsspeichermaterial oder der fluidführenden Schicht (9) einerseits und der Schicht (6) aus dem Abschirmmaterial eine thermoelektrische Schicht (11) angeordnet ist, welche aufgrund der Temperaturdifferenz elektrische Spannung erzeugt.

10. Wärmeabschirmsystem (1) zum Abschirmen eines wärmeemittierenden Elements, wobei das Wärmeabschirmsystem (1) aus einem Speichermaterial-Verbund ausgebildet ist, **dadurch gekennzeichnet, dass** der Verbund aus Metallpartikeln (13) und Sorptionsspeichermaterialpartikeln (12) ausgebildet ist, welche miteinander vermischt und verklebt oder versintert sind.

11. Wärmeabschirmsystem nach Anspruch 10, **dadurch gekennzeichnet, dass** Sorptionsspeichermaterialien mit unterschiedlichen Arbeitstemperaturen und Metallpartikeln miteinander vermischt sind.

12. Wärmeabschirmsystem nach Anspruch 10, **dadurch gekennzeichnet, dass** mehrere Schichten (7a, 7b) von Sorptionsspeichermaterial-Metallverbünden mit jeweils unterschiedlicher Arbeitstemperatur des Sorptionsspeichermaterials geschichtet aufeinander angeordnet und miteinander verbunden sind.

## Claims

1. Thermal shielding system (1) for shielding a heat-emitting element with a hot side (3) or surface (3) facing the heat-emitting element and a cold side (2) or surface (2) facing away from the heat-emitting element, wherein the surface (3) and the surface (2) are each defined from a metal sheet (4, 5), and the metal sheets (4, 5) define a space there between,
**characterized in that**
in the space adjacent to the sheet (5) of the hot side (3) a layer (7) by a sorption heat store material is formed.

2. Thermal shielding system according to claim 1, **characterized in that** the sorption heat store material is a silica gel and / or a zeolite and / or a metal hydride.

3. Thermal shielding system according to claim 1 or 2, **characterized in that** adjacent to the layer (7) made of the sorption heat store material on the one hand and to the sheet (4) of the cold side (2) a shield layer (6) made of a heat-shielding material is positioned.

4. Thermal shielding system according to one of claims 1 to 3, **characterized in that** one or both of the metal sheets (4, 5) are perforated and / or provided with passages and / or corrugations and / or holes and / or recesses.

5. Thermal shielding system according to any one of the preceding claims, **characterized in that** disposed between the layer (7) made of a sorption heat store material and the layer (6) made of the shielding material, a fluid, water or water vapor-carrying layer (9) is positioned.

6. Thermal shielding system according to claim 5, **characterized in that** the fluid carrying layer (9) has lead-out channels or lines leading out of the thermal shielding system (1), wherein the fluid-carrying layer (9) is provided with passages, openings or perforation towards the layer (7) made of a sorption heat store material.

7. Thermal shielding system according to claim 6, **characterized in that** the fluid-carrying layer (9) is formed of a metal, a metal mesh, a metal web, a metal knitting, a metal structure or a ceramic, porous moulding.

8. Thermal shielding system according to any one of the preceding claims, **characterized in that** the layer (7) consisting of a sorption heat store material is a layer formed from different sorption heat store materials, wherein the sorption heat store material is stratified by operating temperature, or blended of several sorption heat store materials.

9. Thermal shielding system according to any one of the preceding claims, **characterized in that** between the layer (7) consisting of a sorption heat store material or the fluid-carrying layer (9) on the one hand and the layer (6) consisting of the shielding material a thermoelectric layer (11) is arranged, which creates electric tension because of the temperature difference.

10. Thermal shielding system (1) for shielding a heat-emitting element, wherein the thermal shielding system (1) consists of a store material composite, **characterized in that** the composite is formed of metal particles (13) and sorption heat store material particles (12), which are mixed together and bonded or sintered.

11. Thermal shielding system according to claim 10, **characterized in that** sorption heat store materials with different working temperatures and metal particles are mixed with each other.

12. Thermal shielding system according to claim 10, **characterized in that** several layers (7a, 7b) of sorption heat store material metal composites each having a different sorption heat store material working temperature are stacked and bonded together.

## Revendications

1. Système de blindage thermique (1) pour protéger un élément émettant de la chaleur avec un côté chaud (3) ou une surface (3) faisant face à l'élément émettant de la chaleur et un côté froid (2) ou une surface (2) opposé à l'élément émettant de la chaleur, dans lequel la surface (3) et la surface ( 2) sont chacune définis par une tôle métallique (4, 5) et les tôles (4, 5) définissent un espace entre elles,
**caractérisé en ce que**
dans l'espace adjacent à la tôle (5) du côté chaud (3) une couche (7) est formée d'un matériau de stockage de sorption.

2. Système de blindage thermique selon la revendication 1, **caractérisé en ce que** le matériau de stockage de sorption est un gel de silice et / ou un zéolite et / ou un hydrure métallique.

3. Système de blindage thermique selon la revendication 1 ou 2, **caractérisé en ce qu'**à côté de la couche (7) de matériau de stockage de sorption, d'un coté, et de la tôle (4) du côté froid (2), une couche de protection (6) réalisé en un matériau de protection contre la chaleur est positionnée.

4. Système de blindage thermique selon l'une quelconque des revendications 1 à 3, **caractérisé en ce qu'**une ou les deux tôles (4, 5) sont perforées et / ou pourvues de passages et / ou d'ondulations et / ou de trous et / ou d'évidements.

5. Système de blindage thermique selon l'une quelconque des revendications précédentes, **caractérisé en ce qu'**entre la couche (7) consistant en un matériau de stockage de sorption et la couche (6) du matériau de protection, une (9) couche conduisant un fluide, de l'eau, ou de la vapeur est positionnée.

6. Système de blindage thermique selon la revendication 5, **caractérisé en ce que** la couche conduisant un fluide (9) possède des canaux ou conduites sortant du système de blindage thermique (1), dans lequel la couche conduisant un fluide (9) est pourvue avec des passages, des ouvertures ou une perforation vers la couche (7) consistant en un matériau de stockage de sorption.

7. Système de blindage thermique selon la revendication 6, **caractérisé en ce que** la couche conduisant un fluide (9) est formée d'un métal, d'un treillis métallique, d'un maillage métallique, d'un tricot de métal, d'une structure en métal ou d'une pièce moulée en céramique poreuse.

8. Système de blindage thermique selon l'une quelconque des revendications précédentes, **caractérisé en ce que** la couche (7) est d'un matériau de stockage de sorption est une couche qui est formée de différents matériaux de stockage de sorption, dans lequel le matériau de stockage de sorption est stratifiée suivant la température de fonctionnement, ou mélangé à partir de plusieurs matériaux de stockage de sorption.

9. Système de blindage thermique selon l'une quelconque des revendications précédentes, **caractérisé en ce qu'**une couche thermo-électrique (11) qui crée une tension électrique à cause de la différence de température est disposée entre la couche (7) consistant en un matériau de stockage de sorption ou de la couche conduisant un fluide (9) d'une part et la couche (6) du matériau de protection.

10. Système de blindage thermique (1) pour le blindage d'un élément émettant de la chaleur, dans lequel le système de blindage thermique (1) consiste en un matériau composite de stockage, **caractérisé en ce que** le composite est formé de particules métalliques (13) et de particules de matériau de stockage de sorption (12), qui sont mélangés ensemble et qui sont collées ou frittées.

11. Système de blindage thermique selon la revendication 10, **caractérisé en ce que** des matériaux de stockage de sorption avec des différentes températures de fonctionnement et particules métalliques sont mélangés les uns aux autres.

12. Système de blindage thermique selon la revendication 10, **caractérisé en ce que** plusieurs couches (7a, 7b) de composites de matériau de stockage de sorption et de métal ayant respectivement une température de fonctionnement du matériau de stockage de sorption différente sont disposées stratifiés les unes sur les autres et liées les unes avec les autres.
